# EUROPEAN PATENT APPLICATION

(11) **EP 4 350 726 A1**
(43) Date of publication of application: **10.04.2024**
(21) Application number: 22815911.7
(22) Date of filing: 24.05.2022
(51) Int. Cl.: H01G 11/12, H01G 11/78, H01M 50/242, H01M 50/249

(54) **POWER STORAGE DEVICE**

(30) Priority: 04.06.2021 JP 2021094522
(71) Applicant: GS Yuasa International Ltd., Kisshoin, Minami-ku, Kyoto-shi, Kyoto 601-8520 (JP)
(72) Inventor: MAEDA, Koki, Kyoto-shi, Kyoto 601-8520 (JP); IWASHIMA, Yasuyuki, Kyoto-shi, Kyoto 601-8520 (JP); KONISHI, Atsuyuki, Kyoto-shi, Kyoto 601-8520 (JP); KAWAI, Takuma, Kyoto-shi, Kyoto 601-8520 (JP)
(74) Representative: Grünecker Patent- und Rechtsanwälte PartG mbB
(86) International application number: PCT/JP2022/021215
(87) International publication number: WO 2022/255161

(57) **Abstract**

An energy storage apparatus includes an energy storage device including a case, an outer case in which the energy storage device is accommodated, and a plate-shaped first plate-shaped member aligned with the energy storage device in a first direction and disposed along the outer case, in which the case includes a case body and a case lid body that are joined to each other, the case body and the case lid body are disposed and aligned in a second direction intersecting with the first direction, and the first plate-shaped member includes a plate-shaped member protrusion that protrudes in the first direction and extends toward an end edge of the plate-shaped member in the second direction.

## Description

### TECHNICAL FIELD

The present invention relates to an energy storage apparatus including an energy storage device and an outer case.

### BACKGROUND ART

Conventionally, there has been known an energy storage apparatus that includes an energy storage device and an outer case that accommodates the energy storage device. Patent Document 1 discloses an assembled battery (energy storage apparatus) including a battery (energy storage device) and a housing (outer case) in which the battery is housed.

### PRIOR ART DOCUMENTS

### PATENT DOCUMENTS

Patent Document 1: JP-A-2017-10781

### SUMMARY OF THE INVENTION

### PROBLEMS TO BE SOLVED BY THE INVENTION

In the conventional energy storage apparatus, crush resistance in an alignment direction of a case body and a case lid body of the energy storage device is relatively weak, and there is a possibility that the energy storage device cannot be effectively protected against external impact and the like.

An object of the present invention is to provide an energy storage apparatus capable of improving protection of an energy storage device against external impact and the like.

### MEANS FOR SOLVING THE PROBLEMS

An energy storage apparatus according to one aspect of the present invention includes an energy storage device including a case, an outer case in which the energy storage device is accommodated, and a plate-shaped member aligned with the energy storage device in a first direction and disposed along the outer case, in which the case includes a case body and a case lid body that are joined to each other, the case body and the case lid body are disposed and aligned in a second direction intersecting with the first direction, and the plate-shaped member includes a plate-shaped member protrusion that protrudes in the first direction and extends toward an end edge of the plate-shaped member in the second direction.

### ADVANTAGES OF THE INVENTION

With an energy storage apparatus according to the present invention, protection of an energy storage device against external impact and the like can be improved.

### BRIEF DESCRIPTION OF THE DRAWINGS

Fig. 1 is a perspective view illustrating an external appearance of an energy storage apparatus according to an embodiment.
Fig. 2 is an exploded perspective view illustrating respective components of an energy storage unit according to the embodiment in an exploded manner.
Fig. 3 is an exploded perspective view illustrating respective components of the energy storage unit according to the embodiment in an exploded manner.
Fig. 4 is an exploded perspective view illustrating respective components of an energy storage device according to the embodiment in an exploded manner.
Fig. 5Ais a perspective view illustrating a configuration of a first plate-shaped member according to the embodiment.
Fig. 5B is a perspective view illustrating a configuration of the first plate-shaped member according to the embodiment.
Fig. 6 is a side view illustrating a positional relationship between an outer case (a first outer case, a second outer case, fixing members, and a second plate-shaped member) and the first plate-shaped member according to the embodiment.
Fig. 7 is a perspective view illustrating a positional relationship between the first outer case, energy storage devices, a spacer, and binding bodies and the first plate-shaped member according to the embodiment.
Fig. 8 is a side view illustrating a positional relationship between the energy storage devices, the spacer, and the binding bodies and the first plate-shaped member according to the embodiment.
Fig. 9 is a cross-sectional view illustrating a positional relationship between the energy storage devices, the spacer, and the binding bodies and the first plate-shaped member according to the embodiment.

### MODE FOR CARRYING OUT THE INVENTION

In the energy storage apparatus having the above-mentioned conventional configuration, there is a case where the energy storage device cannot be effectively protected against external impact and the like. Specifically, in the energy storage apparatus, generally, the case of the energy storage device includes a case body and a case lid body, and an electrode terminal, a gas release valve, and the like are disposed on the case lid body, so that crush resistance from the case lid body side (crush resistance in an alignment direction of the case body and the case lid body) is often weak. Accordingly, in the above-mentioned conventional energy storage apparatus, the outer case that houses the energy storage device plays a role of protecting the energy storage device against impact and the like in the alignment direction of the case body and the case lid body, but there is a case where the outer case alone cannot effectively protect the energy storage device against the impact and the like in the alignment direction. In the conventional energy storage apparatus described above, a binding plate is disposed above the energy storage device (battery), but the binding plate is configured to reinforce the outer case (housing) against impact and the like from a short side surface side of the case than from the case lid body side of the energy storage device. In this manner, in the conventional energy storage apparatus, the crush resistance in the alignment direction of the case body and the case lid body of the energy storage device is relatively weak, and there is a possibility that the energy storage device cannot be effectively protected against external impact and the like.

The present invention has been made by the inventor of the present application with a new focus on the above problems, and an object thereof is to provide an energy storage apparatus capable of improving protection of the energy storage device against external impact and the like.

An energy storage apparatus according to one aspect of the present invention includes an energy storage device including a case, an outer case in which the energy storage device is accommodated, and a plate-shaped member aligned with the energy storage device in a first direction and disposed along the outer case, in which the case includes a case body and a case lid body that are joined to each other, the case body and the case lid body are disposed and aligned in a second direction intersecting with the first direction, and the plate-shaped member includes a plate-shaped member protrusion that protrudes in the first direction and extends toward an end edge of the plate-shaped member in the second direction.

With this configuration, the energy storage apparatus includes the plate-shaped member aligned with the energy storage device in a first direction and disposed along the outer case, the case of the energy storage device includes a case body and a case lid body that are aligned in a second direction, and the plate-shaped member includes a plate-shaped member protrusion that protrudes in the first direction and extends toward an end edge of the plate-shaped member in the second direction. In this manner, by disposing the plate-shaped member at a position along the outer case and forming the plate-shaped member protrusion extending in the second direction (alignment direction of the case body and the case lid body of the energy storage device) on the plate-shaped member, the strength of the outer case in the second direction can be reinforced by the plate-shaped member. Thus, it is possible to improve crush resistance performance of the energy storage apparatus in the second direction (the alignment direction of the case body and the case lid body of the energy storage device), and hence it is possible to improve protection of the energy storage device against external impact and the like.

The plate-shaped member may include a plate-shaped member protrusion that extends from one end edge of the plate-shaped member to an other end edge of the plate-shaped member in the second direction.

With this configuration, the energy storage apparatus includes a plate-shaped member protrusion that protrudes in the first direction and extends over both end edges in the second direction. Thus, it is possible to improve the crush resistance performance of the energy storage apparatus in the second direction on the both end edges of the plate-shaped member, and hence it is possible to improve protection of the energy storage device against external impact and the like.

The energy storage apparatus may include a plurality of the energy storage devices aligned in a longitudinal direction of the case lid body in a third direction intersecting with the first direction and the second direction, and the plate-shaped member may include a plurality of the plate-shaped member protrusions aligned in the third direction.

With this configuration, the energy storage apparatus includes the plurality of the energy storage devices aligned in the third direction, and the plate-shaped member includes the plurality of the plate-shaped member protrusions aligned in the third direction. As described above, in the configuration in which the plurality of the energy storage devices is aligned in the third direction, by the first plate-shaped member including the plurality of the plate-shaped member protrusions aligned in the third direction, the crush resistance performance of the plurality of energy storage devices in the second direction can be improved. Thus, protection of the plurality of the energy storage devices against external impact and the like can be enhanced.

The plate-shaped member may be attached to an outer surface of the outer case.

With this configuration, since the plate-shaped member is attached to the outer surface of the outer case of the energy storage apparatus, the first plate-shaped member can effectively protect the outer case from external impact. Thus, it is possible to more reliably improve protection of the energy storage device against external impact and the like.

The plate-shaped member may be disposed in contact with the outer case, and a space may be formed between the plate-shaped member protrusion and the outer case.

With this configuration, when the plate-shaped member is disposed in contact with the outer case, the plate-shaped member can reinforce the outer case, and hence the protection of the energy storage device against external impact and the like can be more reliably enhanced. Further, by forming the space between the plate-shaped member protrusion and the outer case, weight reduction can be achieved, members such as bolts can be accommodated in the space, and heat insulation can be performed in the sp ace.

The outer case may include an outer case protrusion that protrudes toward the energy storage device, and a protrusion of the plate-shaped member protrusion, the protrusion protruding toward the energy storage device may be disposed in contact with a periphery of the outer case protrusion of the outer case.

With this configuration, since the outer case includes the outer case protrusion, the outer case can be reinforced, and hence it is possible to more reliably improve protection of the energy storage device against external impact and the like. Since the outer case protrusion protrudes toward the energy storage device, it is possible to suppress the expansion of the energy storage device caused by pressing of the outer case protrusion against the energy storage device. In particular, protrusions among the plate-shaped member protrusions that protrude toward the energy storage devices are brought into contact with the periphery of the outer case protrusions. Thus, even when the energy storage devices are about to expand, the plate-shaped member protrusions restrict the movement of the outer case protrusions, whereby the expansion of the energy storage devices can be further suppressed.

The present invention can be implemented not only as the energy storage apparatus but also as a combination of the outer case and the first plate-shaped member or as the first plate-shaped member.

Hereinafter, an energy storage apparatus according to an embodiment of the present invention (including a modification thereof) will be described with reference to the drawings. The embodiments described below illustrate comprehensive or specific examples. Numerical values, shapes, materials, constituent elements, arrangement positions and connection modes of the constituent elements, manufacturing processes, the order of the manufacturing processes, and the like illustrated in the following embodiments are merely examples, and are not intended to limit the present invention. Further, in the drawings, dimensions and the like are not strictly illustrated. In the drawings, the same or similar components are denoted by the same reference numerals.

In the following description and drawings, a longitudinal direction of the outer case of the energy storage apparatus, an array direction of a plurality of energy storage devices such as a first energy storage device and a second energy storage device, an alignment direction of an energy storage unit and a control unit, an opposing direction of a short side surface of a case of the energy storage device, or an alignment direction of a pair of electrode terminals in one energy storage device is defined as an X-axis direction. An alignment direction of the energy storage device and a bus bar or an alignment direction of a body and a lid of the case of the energy storage device is defined as a Y-axis direction. An alignment direction of the body and the lid of the outer case, an alignment direction of the energy storage device and the binding body, an alignment direction of the energy storage device and the spacer, an opposing direction of long side surfaces of the case of the energy storage device, a stacking direction of plates of the electrode assembly of the energy storage device, or a vertical direction is defined as a Z-axis direction. The X-axis direction, the Y-axis direction, and the Z-axis direction are directions intersecting (orthogonal in the present embodiment) with each other. Although the Z-axis direction may not be the vertical direction depending on the usage mode, the Z-axis direction will be described below as the vertical direction for convenience of description.

In the following description, an X-axis positive direction indicates an arrow direction of an X-axis, and an X-axis negative direction indicates a direction opposite to the X-axis positive direction. The same applies to the Y-axis direction and the Z-axis direction. Further, hereinafter, the Z-axis direction may also be referred to as a first direction, the Y-axis direction may also be referred to as a second direction, and the X-axis direction may also be referred to as a third direction. Furthermore, expressions indicating relative directions or postures, such as parallel and orthogonal, strictly include cases where the directions or postures are not the same. Two directions being orthogonal to each other not only means that the two directions are completely orthogonal to each other, but also means that the two directions are substantially orthogonal to each other, that is, the two directions include a difference of, for example, about several percent. In the following description, the expression "insulation" means "electrical insulation".

### (Embodiment)

### [1 General description of energy storage apparatus 1]

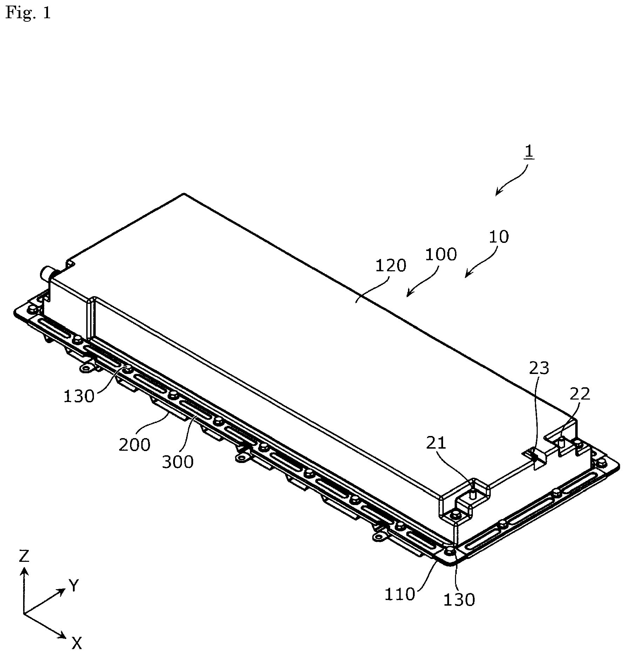

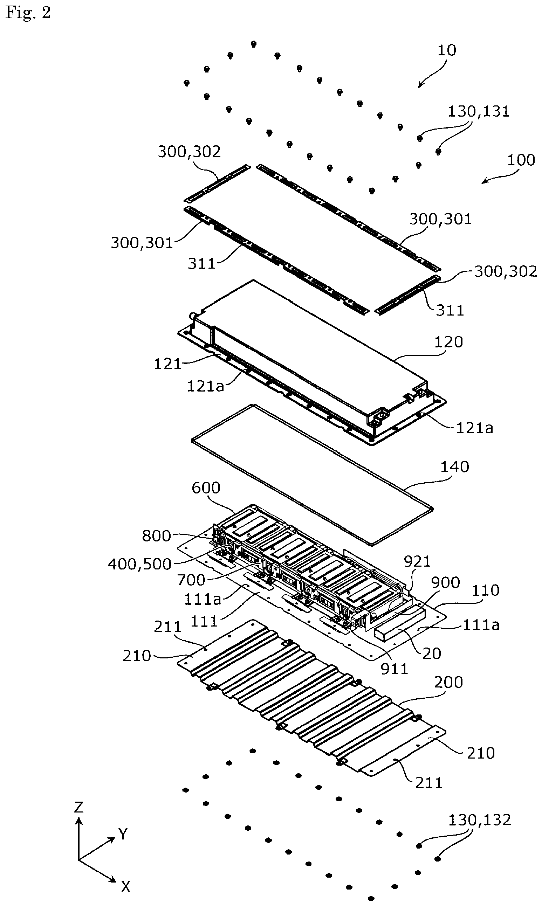

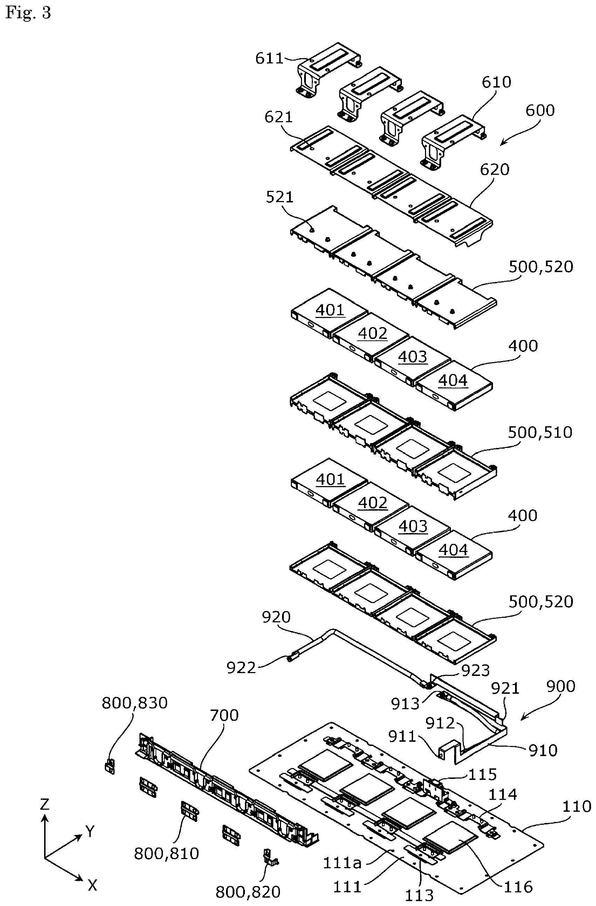

A schematic configuration of an energy storage apparatus 1 in the present embodiment will be described. Fig. 1 is a perspective view illustrating an external appearance of the energy storage apparatus 1 according to the present embodiment. Figs. 2 and 3 are exploded perspective views illustrating components included in an energy storage unit 10 according to the present embodiment in an exploded manner. Fig. 3 illustrates each component fixed to a first outer case 110 of the energy storage unit 10 illustrated in Fig. 2 in an exploded manner.

The energy storage apparatus 1 is an apparatus capable of charging electricity from the outside and discharging electricity to the outside, and has a substantially rectangular parallelepiped shape in the present embodiment. The energy storage apparatus 1 is a battery module (assembled battery) used for power storage application, power supply application, or the like. Specifically, the energy storage apparatus 1 is used as a battery or the like for driving or starting an engine of a mobile body such as an automobile, a motorcycle, a watercraft, a ship, a snowmobile, an agricultural machine, a construction machine, or a railway vehicle for electric railway. Examples of the automobile include an electric vehicle (EV), a hybrid electric vehicle (HEV), a plug-in hybrid electric vehicle (PHEV), and a fossil fuel (gasoline, diesel fuel, or liquefied natural gas) automobile. Examples of the railway vehicle for an electric railway include a train, a monorail, a linear motor car, and a hybrid train including both a diesel engine and an electric motor. The energy storage apparatus 1 can also be used as a stationary battery or the like used for home use, business use, or the like.

As illustrated in Fig. 1 to Fig. 3, the energy storage apparatus 1 includes the energy storage unit 10 and the control unit 20. Hereinafter, a portion of the energy storage apparatus 1 including energy storage devices 400 is referred to as the energy storage unit 10, and a portion of the energy storage apparatus 1 including a control device for controlling the energy storage devices 400 is referred to as the control unit 20. The energy storage unit 10 includes an outer case 100 and a first plate-shaped member 200, and the energy storage devices 400, a spacer 500, a binding body 600, a bus bar frame 700, bus bars 800, a conductive member 900, the control unit 20 and the like are housed in the outer case 100. A pair of (positive electrode and negative electrode) external terminals 21 and 22 and a connector 23 are disposed in the outer case 100. Each component will be described in detail below.

### [1.1 Description of outer case 100]

The outer case 100 is a case (module case) having a box shape (substantially rectangular parallelepiped shape) that forms an outer case of the energy storage apparatus 1. The outer case 100 is disposed outward of the energy storage devices 400 and the like, fixes the energy storage devices 400 and the like at predetermined positions, and protects the energy storage devices 400 and the like from impact and the like. The outer case 100 includes the first outer case 110, a second outer case 120, a fixing member 130, a gasket 140, and a second plate-shaped member 300.

The first outer case 110 is a flat rectangular member that forms a body of the outer case 100 and on which the energy storage devices 400 and the like are attached and fixed. The second outer case 120 is a bottomed rectangular cylindrical member that forms a lid body of the outer case 100, is disposed in the Z-axis positive direction of the first outer case 110, and is connected to the first outer case 110 to cover the energy storage devices 400 and the like. An opening is formed in the second outer case 120 on a Z-axis negative direction side, and the first outer case 110 is disposed so as to close the opening of the second outer case 120.

The first outer case 110 is formed by a metal member such as stainless steel, aluminum, an aluminum alloy, iron, or a steel plate, or a member having high rigidity such as the metal member subjected to an insulation treatment such as an insulation coating, from a viewpoint of ensuring safety (crush resistance). From the viewpoint of weight reduction and the like, the second outer case 120 is formed by a resin member (insulating member) such as polycarbonate (PC), polypropylene (PP), polyethylene (PE), polystyrene (PS), polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene-perfluoroalkyl vinyl ether (PFA), polytetrafluoroethylene (PTFE), polyether sulfone (PES), polyamide (PA), ABS resin, or a composite material thereof. Note that the first outer case 110 may be formed of a resin member similar to that of the second outer case 120, but is preferably formed of a member having high rigidity. Further, the second outer case 120 may be made of a metal member similar to that of the first outer case 110.

The first outer case 110 includes a first connecting portion 111, attachment bases 113, 114, and 115, and outer case protrusions 116. The second outer case 120 includes a second connecting portion 121.

The first connecting portion 111 is a portion (flange portion) which is disposed on an outer peripheral portion of the first outer case 110 and has a square annular shape as viewed in a top view (as viewed in the Z-axis direction), is disposed at a position facing the second connecting portion 121 of the second outer case 120, and is connected to the second connecting portion 121 in a state of overlapping the second connecting portion 121. Similarly, the second connecting portion 121 is a portion (flange portion) which is disposed on an outer peripheral portion of the second outer case 120 and has a square annular shape in a top view, is disposed at a position facing the first connecting portion 111, and is connected to the first connecting portion 111 in a state of overlapping the first connecting portion 111. The first connecting portion 111 and the second connecting portion 121 are connecting portions which overlap each other in the Z-axis direction (first direction) and are connected to each other, and are disposed along the Y-axis direction (second direction intersecting with the first direction) and the X-axis direction (third direction intersecting with the first direction and the second direction).

The attachment bases 113 and 114 are members to which the binding body 600 is attached. Specifically, the attachment base 113 is disposed on an end of the first outer case 110 in the Y-axis negative direction, and a portion of the binding body 600 on a side of the Y-axis negative direction of a first binding body 610 to be described later is attached to the attachment base. The attachment base 114 is disposed on an end portion of the first outer case 110 in the Y-axis positive direction, and a portion of the first binding body 610 on the Y-axis positive direction side is attached to the attachment base. More specifically, the attachment bases 113 and 114 have bolt portions, and the binding body 600 (first binding body 610) is attached to the attachment bases 113 and 114 by the bolt portions coupling with nuts.

The attachment base 115 is a member to which the conductive member 900 is attached. Specifically, the attachment base 115 is disposed at a center portion of the first outer case 110 in the X-axis direction and at an end of the first outer case 110 in the Y-axis positive direction, and attachment portions 913 and 923 of the conductive member 900 described later are attached to the attachment base. More specifically, the attachment base 115 has a bolt portion, and the conductive member 900 (attachment portions 913 and 923) is attached to the attachment base 115 by coupling the bolt portion with a nut.

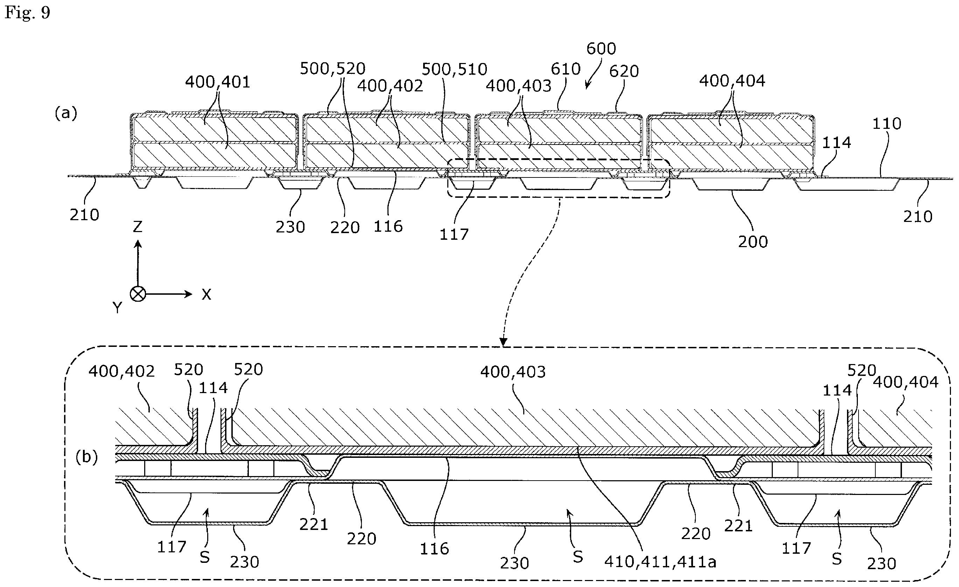

The outer case protrusion 116 is a protrusion that protrudes toward the energy storage device 400. Specifically, the outer case protrusion 116 is a protrusion which is disposed at a center portion of the first outer case 110 in the Y-axis direction, has a rectangular shape as viewed in a top view, and protrudes in the Z-axis positive direction. Corresponding to the four energy storage devices 400 aligned in the X-axis direction, four outer case protrusions 116 are disposed and aligned in the X-axis direction. Each of the outer case protrusions 116 is disposed at a position facing a center portion of a long side surface 411a of the energy storage device 400 described later and presses the center portion of the energy storage device 400 (see Fig. 9).

In the second outer case 120, control electric wires (also referred to as a communication line, a control line, a communication cable, and a control cable) that transmit information on voltage, temperature, or the like of the energy storage devices 400 are connected to the control unit 20 so that information on voltage, temperature, or the like of the energy storage devices 400 is transmitted to and from the control unit 20. In addition, the control unit 20 is electrically connected to the connector 23, whereby the information is transmitted to the outside.

The gasket 140 is a gasket disposed between the first outer case 110 and the second outer case 120. Specifically, the gasket 140 is an O-ring which is disposed between the first connecting portion 111 and the second connecting portion 121 and has a rectangular annular shape in a top view. More specifically, the gasket 140 is disposed between the first connecting portion 111 and the second connecting portion 121 in a state of being compressed by the first connecting portion 111 and the second connecting portion 121. The gasket 140 is formed by a resin material or the like which can be used for the second outer case 120, such as rubber (natural rubber or synthetic rubber), PC, PP, or PE.

The second plate-shaped member is a member which is disposed at a position where the second outer case 120 is sandwiched between the second plate-shaped member 300 and the first outer case 110 and is disposed along outer peripheral portions of the first outer case 110 and the second outer case 120. The second plate-shaped member 300 is disposed at a position sandwiching the second connecting portion 121 with the first connecting portion 111, and extends in the X-axis direction or the Y-axis direction (third direction or second direction). In the present embodiment, two second plate-shaped members 301 extending in the X-axis direction (third direction) are disposed with respect to the first connecting portion 111 and the second connecting portion 121 on both sides in the Y-axis direction. Two second plate-shaped members 302 extending in the Y-axis direction (second direction) are disposed with respect to the first connecting portion 111 and the second connecting portion 121 on both sides in the X-axis direction. Thus, four second plate-shaped members 300 (two second plate-shaped members 301 and two second plate-shaped members 302) are disposed on almost the whole outer peripheral portions of the first outer case 110 and the second outer case 120. In other words, the second plate-shaped member 300 is disposed to extend over the plurality of fixing members 130.

The second plate-shaped member 300 is formed by a metal member such as stainless steel, aluminum, an aluminum alloy, iron, or a steel plate, or a member having high rigidity such as the metal member subjected to an insulation treatment such as an insulation coating. The first connecting portion 111 is a flange portion made of metal (high rigidity), and the second connecting portion 121 is a flange portion made of resin (low rigidity). Thus, the second connecting portion 121 has lower rigidity than at least one of the first connecting portion 111 or the second plate-shaped member 300. In the present embodiment, the second connecting portion 121 has lower rigidity than both the first connecting portion 111 and the second plate-shaped member 300. At least one of the first connecting portion 111 or the second plate-shaped member 300 (in the present embodiment, both the first connecting portion 111 and the second plate-shaped member 300 are provided) has higher rigidity than the second connecting portion 121.

High (or low) rigidity means strong (or weak) against external force, and can be defined as a state in which dimensional change is small (or large) against bending or twisting force. The state in which the second connecting portion 121 is lower in rigidity than the first connecting portion 111 refers to a case where a dimensional change (deflection amount) of the second connecting portion 121 is larger when central portions of regions of the same size are pressed with the same force with respect to the first connecting portion 111 and the second connecting portion 121. It can also be said that the force required for causing the same dimensional change is smaller in the second connecting portion 121 than in the first connecting portion 111. The definition of the rigidity is not limited to the above, and is only required to be a definition within a range that can be usually interpreted by those skilled in the art.

It is sufficient if the second connecting portion 121 has rigidity lower than rigidity of at least one of the first connecting portion 111 or the second plate-shaped member 300 as a whole. The second connecting portion 121 may be made of a material having lower rigidity (may be formed of a material having lower rigidity) than at least one of the first connecting portion 111 or the second plate-shaped member 300, or may be of structurally lower rigidity (may be formed of a shape having lower rigidity) than at least one of the first connecting portion 111 or the second plate-shaped member.

The fixing member 130 includes first fixing members 131 and second fixing members 132. The first fixing members 131 and the second fixing members 132 are members which are connected (joined) to each other to connect (join) the first outer case 110 and the second outer case 120 to each other. Specifically, the plurality of second fixing members 132 is disposed and aligned in the first connecting portion 111 at substantially equal intervals, and the plurality of first fixing members 131 is disposed and aligned in the second connecting portion 121 at positions corresponding to the second fixing members 132. Accordingly, the first fixing members 131 and the second fixing members 132 connect (join) the first connecting portion 111 and the second connecting portion 121 together with the second plate-shaped member 300.

In the present embodiment, the first fixing members 131 are bolts, and the second fixing members 132 are nuts to which the bolts are coupled. Through holes 111a are formed in the first connecting portion 111, through holes 121a are formed in the second connecting portion 121, and through holes 311 are formed in the second plate-shaped member 300. A male screw portion of each first fixing member 131 is inserted into the through holes 311, 121a, and 111a, and the male screw portion is coupled to the female screw portion of the second fixing member 132. Thus, the first fixing members 131 and the second fixing members 132 press the second plate-shaped member 300 toward the second connecting portion 121 in a state where the second connecting portion 121 is sandwiched between the first connecting portion 111 and the second plate-shaped member 300 to connect (fix) the first connecting portion 111 and the second connecting portion 121 to each other.

The second fixing members 132 may be bolts, and the first fixing members 131 may be nuts to which the bolt is coupled. A method of connecting (joining) the first outer case 110 and the second outer case 120 may be another method, and may be joining by rivets, caulking joining, sandwiching by clips, adhesion, welding, heat sealing, ultrasonic welding, or the like.

### [1.2 Description of first plate-shaped member 200]

The first plate-shaped member 200 is a plate-shaped member aligned with the energy storage devices 400 in the Z-axis direction (first direction) and disposed along the outer case 100. The first plate-shaped member 200 is attached to an outer surface of the outer case 100. Specifically, the first plate-shaped member 200 is a rectangular and corrugated member that extends in the X-axis direction along the first outer case 110 in the Z-axis negative direction of the energy storage devices 400 and the first outer case 110. Then, the first plate-shaped member 200 is brought into contact with an outer surface of the first outer case 110 on the Z-axis negative direction side and is attached to the outer surface. The first plate-shaped member 200 may be formed by bending a plate-shaped member into a corrugated plate shape, or may be formed by casting (die casting) or the like.

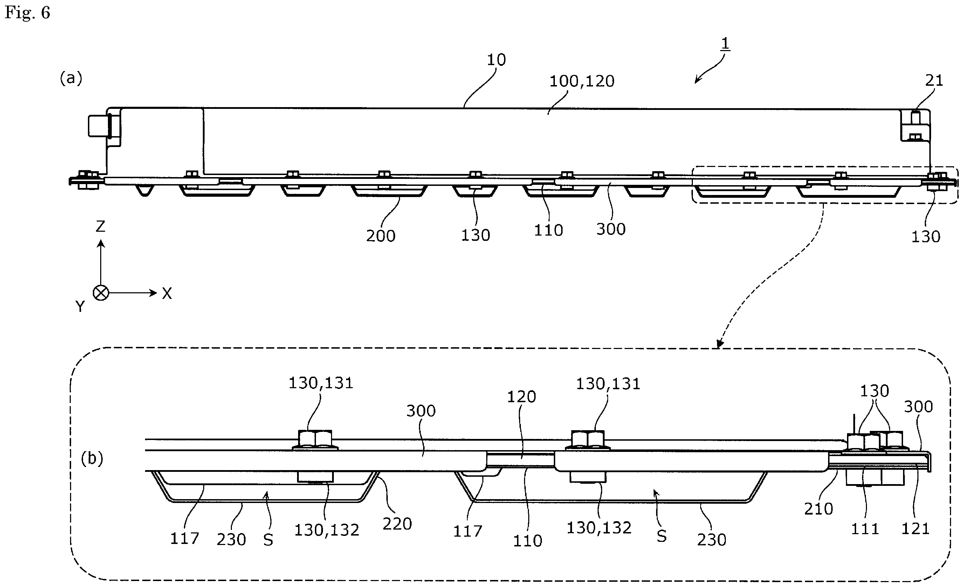

In the present embodiment, the first plate-shaped member 200 is attached to the first connecting portion 111 together with the second connecting portion 121 and the second plate-shaped member 300 by the fixing members 130 (the first fixing members 131 and the second fixing members 132) at both end portions in the X-axis direction (see Fig. 6). The first plate-shaped member 200 includes plate-shaped member connecting portions 210 in which through holes 211 are formed at both ends in the X-axis direction. A male screw portion of each first fixing member 131 is inserted into the through hole 311 of the second plate-shaped member 300, the through hole 121a of the second connecting portion 121, the through hole 111a of the first connecting portion 111, and the through hole 211 of the plate-shaped member connecting portion 210, and is coupled to a female screw portion of the second fixing member 132. Thus, the first plate-shaped member 200 is attached to the first outer case 110 together with the second outer case 120 and the second plate-shaped member 300.

The second plate-shaped member 300 is not disposed at a position corresponding to the fixing members 130 disposed at both end portions in the X-axis direction and both end portions in the Y-axis direction (corner portions in the X-axis direction and the Y-axis direction). Thus, at the corner portions, the first plate-shaped member 200 is attached to the first connecting portion 111 together with the second connecting portion 121. At the corner portions, the first plate-shaped member 200 is attached to the first outer case 110 together with the second outer case 120. The configuration of the first plate-shaped member 200 will be described in detail later.

### [1.3 Description of each component in outer case 100]

The energy storage device 400 is a secondary battery (battery cell) capable of charging and discharging electricity, and more specifically, is a nonaqueous electrolyte secondary battery such as a lithium ion secondary battery. The energy storage device 400 has a flat rectangular parallelepiped shape (prismatic shape), and in the present embodiment, eight energy storage devices 400 are arrayed in the Z-axis direction and the X-axis direction in a state where the eight energy storage devices 400 are placed horizontally (lying sideways) (in a state where long side surfaces 411a of the energy storage devices described later are directed in the Z-axis direction). Specifically, the two first energy storage devices 401 are stacked (stacked flat) in the Z-axis direction, the two second energy storage devices 402 are stacked (stacked flat) in the Z-axis direction, the two third energy storage devices 403 are stacked (stacked flat) in the Z-axis direction, and the two fourth energy storage devices 404 are stacked (stacked flat) in the Z-axis direction. Then, two first energy storage devices 401, two second energy storage devices 402, two third energy storage devices 403, and two fourth energy storage devices 404 are arrayed and aligned in the X-axis direction from the X-axis negative direction toward the X-axis positive direction.

The number of the energy storage devices 400 is not particularly limited, any number of the energy storage devices 400 may be disposed (stacked) in the Z-axis direction, and any number of the energy storage devices 400 may be disposed (arrayed) in the X-axis direction. The shape of the energy storage device 400 is not limited to the above-mentioned square shape, and may be a polygonal columnar shape, a cylindrical shape, an elliptical columnar shape, an oval columnar shape, or the like other than the above-mentioned prismatic shape. The energy storage device 400 is not limited to the nonaqueous electrolyte secondary battery, and may be a secondary battery other than the nonaqueous electrolyte secondary battery, or may be a capacitor. The energy storage device 400 may be not a secondary battery but a primary battery that can use stored electricity without being charged with electricity by a user. The energy storage device 400 may be a battery using a solid electrolyte. The energy storage device 400 may be a pouch type energy storage device. Configurations of the energy storage devices 400 will be described in detail later.

The spacer 500 is a rectangular flat-plate-shaped spacer disposed adjacent to the energy storage device 400. The spacers 500 are disposed in the Z-axis positive direction or the Z-axis negative direction of the energy storage device 400 so as to oppose the long side surface 411a of the energy storage device 400. The spacers 500 are formed of an insulating member made of any resin material or the like which can be used for the second outer case 120, a member having high heat insulation property such as a damper material, or the like.

In the present embodiment, the intermediate spacer 510 and the pair of end spacers 520 are disposed as the spacer 500. The intermediate spacer 510 is a spacer 500 disposed between the two energy storage devices 400, and the end spacer 520 is a spacer 500 disposed between the energy storage devices 400 and the first outer case 110 or the binding body 600. The intermediate spacers 510 and the pair of end spacers 520 are disposed so as to sandwich the energy storage devices 400 in the Z-axis direction and electrically insulate the energy storage devices 400 from each other and the energy storage devices 400 from the first outer case 110 and the binding body 600. In the present embodiment, since the first to fourth energy storage devices 401 to 404 are disposed and aligned in the X-axis direction, the intermediate spacer 510 and the pair of end spacers 520 are disposed for each of the first to fourth energy storage devices 401 to 404. In place of the spacer 500 or in addition to the spacer 500, an insulating sheet may be disposed on a side surface of the energy storage device 400.

Two protrusions 521 aligned in the X-axis direction are formed at end portions in the Y-axis negative direction of each of the end spacers 520 disposed on the Z-axis positive direction side. A protrusion 521 is a columnar protrusion protruding in the Z-axis positive direction, and is inserted into a circular through hole 611 formed in the first binding body 610 of the binding body 600 described later and the circular through hole 621 formed in the second binding body 620. Thus, the binding body 600 can be positioned with respect to the spacer 500 (and the energy storage device 400).

The binding body 600 is a narrow member that sandwiches the plurality of energy storage devices 400 such as the first energy storage device 401 and the second energy storage device 402 in the Z-axis direction between the binding body 600 and the first outer case 110. Specifically, the first outer case 110 and the binding body 600 are joined to each other to sandwich the plurality of energy storage devices 400 therebetween. Thus, the first outer case 110 and the binding bodies 600 bind the plurality of energy storage devices 400 in the Z-axis direction (apply a binding force in the Z-axis direction to the plurality of energy storage devices 400). The first outer case 110 extends in the X-axis direction across the first to fourth energy storage devices 401 to 404, and the binding body 600 binds each of the first to fourth energy storage devices 401 to 404 individually with the first outer case 110. The binding body 600 is formed of a metal member or the like which can be used for the first outer case 110.

The binding body 600 includes a first binding body 610 and a second binding body 620. The first binding body 610 is a plate-shaped member which is disposed in the Z-axis positive direction of the second binding body 620, is joined to the first outer case 110, and has an inverted U shape as viewed in the X-axis direction. The second binding body 620 is a plate-shaped member disposed so as to cover substantially the entire surface of the side surface on the Z-axis positive direction side of the energy storage device 400 and the spacer 500 (end spacer 520) in the Z-axis positive direction. The first binding body 610 and the second binding body 620 are formed with protrusions extending in the Y-axis direction in order to improve strength and the like, but the position, shape, and number of the protrusions are not particularly limited, and a configuration in which the protrusions are not formed may be employed. The first binding body 610 and the second binding body 620 may be integrally formed, or the binding body 600 may not include the second binding body 620.

The first to fourth energy storage devices 401 to 404 are disposed apart from each other, and the binding bodies 600 aligned in the X-axis direction are also disposed apart from each other. Accordingly, it is possible to suppress transfer of heat between the first energy storage device 401 and the second energy storage device 402, and hence it is possible to suppress mutual thermal influence between the first energy storage device 401 and the second energy storage device 402. A heat insulating material may be disposed in a gap between the first energy storage device 401 and the second energy storage device 402, and it is possible to further suppress mutual thermal influence between the first energy storage device 401 and the second energy storage device 402.

The bus bar frame 700 is a flat rectangular insulating member capable of electrically insulating the bus bars 800 from other members and restricting the positions of the bus bars 800. The bus bar frame 700 is formed by any resin material or the like that can be used for the second outer case 120. The bus bar frame 700 is disposed in the Y-axis negative direction of the plurality of energy storage devices 400 and is positioned with respect to the plurality of energy storage devices 400 so that the bus bars 800 are positioned with respect to the plurality of energy storage devices 400 and is joined to electrode terminals of the plurality of energy storage devices 400.

The bus bar 800 is a plate-shaped member which is disposed in the Y-axis negative direction of the plurality of energy storage devices 400 and is connected (joined) to the plurality of energy storage devices 400 and the conductive member 900. The bus bars 800 include bus bars 810, 820, and 830. The bus bars 810 connect electrode terminals 420, which will be described later, included in the adjacent energy storage devices 400. The bus bars 820 and 830 connect the electrode terminals 420 of the energy storage devices 400 and connecting portions 912 and 922 of the conductive member 900 to be described later, and electrically connect the energy storage device 400 and the external terminals 21 and 22 of a positive electrode and a negative electrode.

In the present embodiment, the bus bars 800 and the electrode terminals 420 of the energy storage devices 400 are connected (joined) to each other by welding, but may be connected (joined) to each other by bolt fastening or the like. The bus bars 800 and the connecting portions 912 and 922 of the conductive member 900 are connected (joined) by bolt fastening, but may be connected (joined) by welding or the like. The bus bars 800 are formed by a conductive member made of metal such as aluminum, an aluminum alloy, copper, a copper alloy, or nickel, a combination thereof, or a conductive member other than metal. In the present embodiment, the bus bars 800 form four sets of energy storage device groups by connecting two energy storage devices 400 in parallel, and connect the four sets of energy storage device groups in series. However, the bus bars 800 may connect all eight energy storage devices 400 in series, or may have other configurations.

The conductive member 900 is a conductive member connected to the bus bars 800 and the control unit 20 to electrically connect the energy storage device 400 and the external terminals 21 and 22. That is, the conductive member 900 is a conductive member (also referred to as a power supply line, a power line, a main circuit cable, a power supply cable, and a power cable) disposed on a main current (charge/discharge current) path of the energy storage device 400. The conductive member 900 is formed of a conductive member made of metal such as aluminum, an aluminum alloy, copper, a copper alloy, or nickel, a combination thereof, or a conductive member other than metal. The conductive member 900 includes a conductive member 910 and a conductive member 920. The conductive member 910 includes connecting portions 911 and 912 and an attachment portion 913. The conductive member 920 includes connecting portions 921 and 922 and an attachment portion 923.

The connecting portion 912 is a portion connected to the bus bar 820, and the connecting portion 922 is a portion connected to the bus bar 830. The attachment portions 913 and 923 are portions attached to the attachment base 115 of the first outer case 110. In the present embodiment, the conductive member 910 has a configuration in which the plate-shaped member extends from the connecting portion 911 to the attachment portion 913, and the electric wire is disposed to extend from the attachment portion 913 to the connecting portion 912. The conductive member 920 has a configuration in which a plate-shaped member extends from the connecting portion 921 to the attachment portion 923, and an electric wire is disposed to extend from the attachment portion 923 to the connecting portion 922.

### [1.4 Description of other components]

The control unit 20 is a device including a control device (not illustrated) that controls the energy storage devices 400 in the energy storage unit 10, and is specifically a battery management system (BMS) that controls the energy storage devices 400. The control device disposed in the control unit 20 is a device that is connected to a main current path of the energy storage device 400 and controls the energy storage device 400, and includes a circuit board, a fuse, a relay, a semiconductor switch such as a field effect transistor (FET), a shunt resistor, and the like that control charging and discharging of the energy storage device 400. The control unit 20 is accommodated in the outer case 100.

The external terminals 21 and 22 which are a pair of module terminals (total terminals) of a positive electrode and a negative electrode are disposed on an end portion of the outer case 100 in the X-axis positive direction. The external terminals 21 and 22 are electrically connected to the energy storage devices 400 of the energy storage unit 10 via the connecting portions 911 and 921. The energy storage apparatus 1 is charged with electricity from the outside and discharges electricity to the outside through the external terminals 21 and 22. The external terminal 21 is a positive electrode external terminal which is an external terminal of a positive electrode, and the external terminal 22 is a negative electrode external terminal which is an external terminal of a negative electrode. The external terminals 21 and 22 are each formed by, for example, a conductive member made of metal such as aluminum, an aluminum alloy, copper, or a copper alloy.

### [2 Description of configuration of energy storage device 400]

Configurations of the energy storage devices 400 will be described in detail. Since the eight energy storage devices 400 (two first energy storage devices 401, two second energy storage devices 402, two third energy storage devices 403, and two fourth energy storage devices 404) included in the energy storage unit 10 all have similar configurations, the configuration of one energy storage device 400 will be described below.

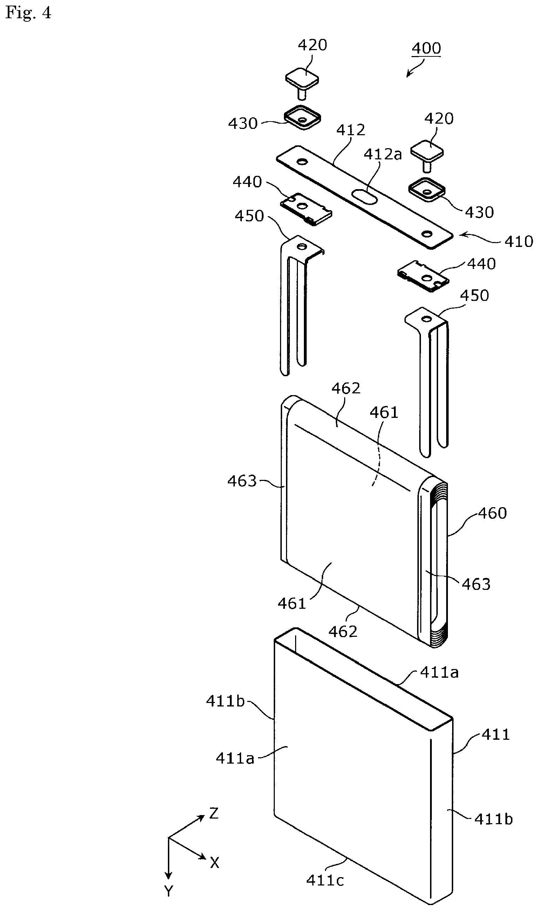

Fig. 4 is an exploded perspective view illustrating respective components of the energy storage device 400 according to the present embodiment in an exploded manner. Specifically, Fig. 4 is an exploded view of respective parts of the energy storage device 400 illustrated in Fig. 3 in a state where the energy storage device is vertically disposed (erected).

As illustrated in Fig. 4, the energy storage device 400 includes a case 410, a pair of (positive electrode and negative electrode) electrode terminals 420, and a pair of (positive electrode and negative electrode) gaskets 430. Inside the case 410, a pair of (positive electrode and negative electrode) gaskets 440, a pair of (positive electrode and negative electrode) current collectors 450, and an electrode assembly 460 are accommodated. Although an electrolyte solution (nonaqueous electrolyte) is sealed in the case 410, the illustration is omitted. A kind of the electrolyte solution is not particularly limited as long as performance of the energy storage device 400 is not impaired, and various electrolyte solutions can be selected. In addition to the above components, a spacer disposed on a side surface, a lower side, or the like of the electrode assembly 460, an insulating film enclosing the electrode assembly 460 or the like, an insulating sheet covering an outer surface of the case 410, or the like may be disposed.

The case 410 is a case having a rectangular parallelepiped shape (prismatic shape or box shape) including a case body 411 in which an opening is formed and a case lid body 412 that closes the opening of the case body 411. With such a configuration, the case 410 has a structure in which the inside can be sealed by joining the case body 411 and the case lid body 412 to each other by welding or the like after the electrode assembly 460 and the like are accommodated in the case body 411. The material of the case body 411 and the case lid body 412 is not particularly limited, but is preferably a weldable metal such as stainless steel, aluminum, an aluminum alloy, iron, or a plated steel plate.

The case body 411 is a member having a rectangular cylindrical shape and a bottom forming a body of the case 410, and an opening is formed on a Y-axis negative direction side. The case body 411 includes a pair of rectangular and planar (flat) long side surfaces 411a on both side surfaces in the Z-axis direction, a pair of rectangular and planar (flat) short side surfaces 411b on both side surfaces in the X-axis direction, and a rectangular and planar (flat) bottom surface 411c on the Y-axis positive direction side. The case lid body 412 is a rectangular plate-shaped member forming a lid body of the case 410, and is disposed to extend in the X-axis direction on the Y-axis negative direction side of the case body 411. The case lid body 412 is provided with a gas release valve 412a that releases the pressure when the pressure inside the case 410 increases, an electrolyte solution filling unit (not illustrated) for filling an electrolyte solution inside the case 410, and the like. In this manner, the case 410 includes the case body 411 and the case lid body 412 which are disposed and aligned in the Y-axis direction (second direction) and joined to each other. The first to fourth energy storage devices 401 to 404 are disposed and aligned in the X-axis direction (third direction) which is a longitudinal direction of the case lid body 412.

The electrode assembly 460 is an energy storage element (power generating element) formed by stacking a positive electrode plate, a negative electrode plate, and a separator. The positive electrode plate is obtained by forming a positive active material layer on a positive electrode substrate layer which is a current collecting foil made of a metal such as aluminum or an aluminum alloy. The negative electrode plate is obtained by forming a negative active material layer on a negative electrode substrate layer which is a current collecting foil made of a metal such as copper or a copper alloy. As the active material used for the positive active material layer and the negative active material layer, a known material can be appropriately used as long as it can occlude and release lithium ions. In the present embodiment, the electrode assembly 460 is a winding type (what is called a vertical winding type) electrode assembly which is formed by winding plates (a positive electrode plate and a negative electrode plate) around a winding axis (a virtual axis parallel to the X-axis direction) extending in the X-axis direction.

The plates (the positive electrode plate and the negative electrode plate) of the electrode assembly 460 are stacked in the Z-axis direction, and thus the Z-axis direction is also referred to as a stacking direction. The electrode assembly 460 is formed by stacking plates in the stacking direction. The electrode assembly 460 includes a pair of flat portions 461 aligned in the Z-axis direction and a pair of curved portions 462 aligned in the Y-axis direction by winding plates, and the stacking direction is a stacking direction of the plates in the flat portions 461. The flat portions 461 are flat portions connecting the ends of the pair of curved portions 462, and the curved portions 462 are portions curved in a semicircular shape or the like so as to protrude in the Y-axis direction. The direction in which flat surfaces of the flat portions 461 face or the opposing direction of the pair of flat portions 461 can also be defined as the stacking direction. Thus, it can be said that the plurality of first energy storage devices 401 are aligned in the stacking direction. The same applies to the other energy storage devices 400. The X-axis direction in which the first to fourth energy storage devices 401 to 404 are arrayed is also referred to as an array direction. The first to fourth energy storage devices 401 to 404 are arrayed in an array direction intersecting with the stacking direction.

In the electrode assembly 460, the positive electrode plate and the negative electrode plate are wound so as to be shifted from each other in the X-axis direction, and thus the positive electrode plate and the negative electrode plate each have a portion (active material layer non-forming portion) where the active material is not formed (applied) and the substrate layer is exposed at an end in a shifted direction. The electrode assembly 460 include ends 463 that protrude from the flat portions 461 and the curved portions 462 toward both sides in the X-axis direction at both ends in the X-axis direction and are connected to the current collectors 450 by stacking the active material layer non-forming portions of the positive electrode plate and the negative electrode plate.

The electrode assembly 460 may be an electrode assembly in any form such as what is called a horizontal winding type electrode assembly formed by winding plates around a winding axis extending in the Y-axis direction, a stack type electrode assembly formed by stacking a plurality of flat plates, a bellows type electrode assembly formed by folding plates in a bellows shape, or the like. In a case of the horizontal winding type electrode assembly, flat portions other than the curved portions and a connecting portion (tab) with the current collector are flat portions, and in a case of the stack-type electrode assembly and the bellows-type electrode assembly, flat portions other than the connecting portion (tab) with the current collector are flat portions.

The electrode terminals 420 are terminals (a positive electrode terminal and a negative electrode terminal) of the energy storage device 400, and is disposed on the case lid body 412 so as to protrude in the Y-axis negative direction. The electrode terminals 420 are electrically connected to the positive electrode plate and the negative electrode plate of the electrode assembly 460 via the current collectors 450. The electrode terminals 420 are formed by a conductive member made of metal such as aluminum, an aluminum alloy, copper, or a copper alloy.

The current collectors 450 are conductive members (a positive electrode current collector and a negative electrode current collector) electrically connected to the electrode terminals 420 and the ends 463 of the electrode assembly 460. The current collectors 450 are made of aluminum, an aluminum alloy, copper, a copper alloy, or the like. The gaskets 430 and 440 are sealing members which are disposed between the case lid body 412 and the electrode terminals 420 and the current collectors 450 and have a flat-plate shape and an electrically insulating property. The gaskets 430 and 440 are formed by any electrically insulating resin material or the like that can be used for the second outer case 120.

### [3 Description of configuration of first plate-shaped member 200]

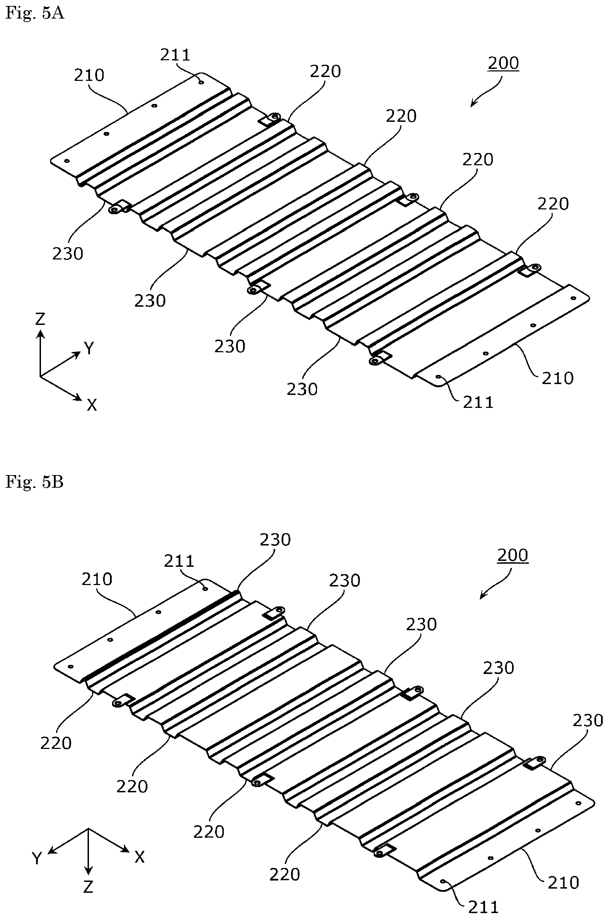

The configuration of the first plate-shaped member 200 will be described in detail. Figs. 5A and 5B are perspective views illustrating a configuration of the first plate-shaped member 200 according to the present embodiment. Specifically, Fig. 5A is an enlarged perspective view illustrating the first plate-shaped member 200 illustrated in Fig. 2 in an enlarged manner, and Fig. 5B is a perspective view illustrating a configuration in a case where the first plate-shaped member 200 of Fig. 5A is rotated by 180 ° about the X axis.

Fig. 6 is a side view illustrating a positional relationship between the outer case 100 (the first outer case 110, the second outer case 120, the fixing members 130, and the second plate-shaped member 300) and the first plate-shaped member 200 according to the present embodiment. Specifically, (a) of Fig. 6 illustrates a configuration when the energy storage apparatus 1 illustrated in Fig. 1 is viewed from a Y-axis negative direction, and (b) of Fig. 6 illustrates a portion surrounded by a broken line in (a) of Fig. 6 in an enlarged manner.

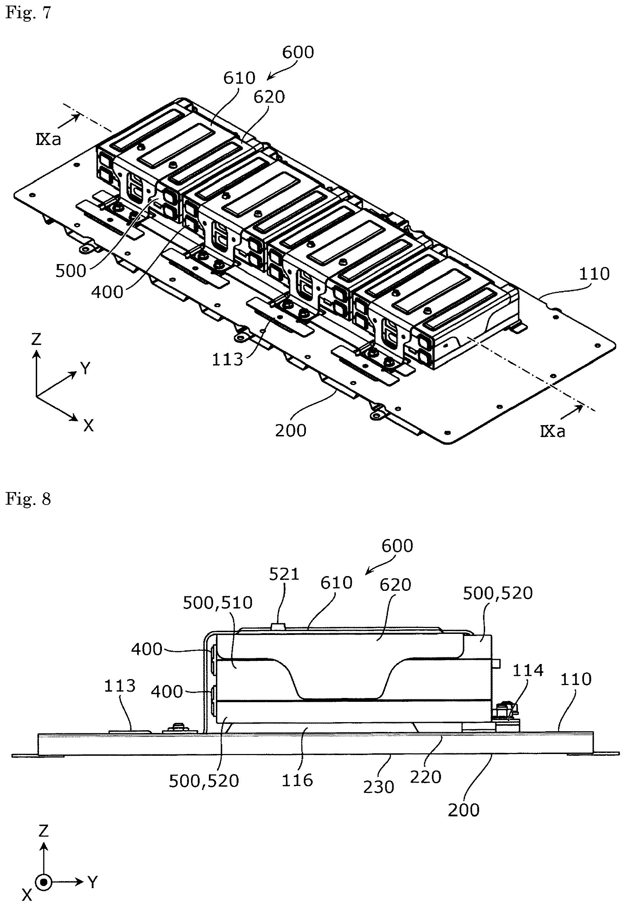

Fig. 7 is a perspective view illustrating a positional relationship between the first outer case 110, the energy storage devices 400, the spacer 500, and the binding bodies 600 and the first plate-shaped member 200 according to the present embodiment. Specifically, Fig. 7 illustrates a configuration where the binding body 600 is attached to the attachment bases 113 and 114 of the first outer case 110 together with the energy storage devices 400 and the spacers 500, and the first plate-shaped member 200 is disposed on the first outer case 110. Fig. 8 is a side view illustrating a positional relationship between the energy storage devices 400, the spacer 500, and the binding bodies 600 and the first plate-shaped member 200 according to the present embodiment. Specifically, Fig. 8 illustrates a configuration when the configuration of Fig. 7 is viewed from the X-axis positive direction. Fig. 9 is a cross-sectional view illustrating a positional relationship between the energy storage devices 400, the spacer 500, and the binding bodies 600 and the first plate-shaped member 200 according to the present embodiment. Specifically, (a) of Fig. 9 illustrates a cross section of the configuration of Fig. 7 taken along a plane passing through line IXa-IXa and parallel to an XZ plane, and (b) of Fig. 9 illustrates a portion surrounded by a broken line in (a) of Fig. 9 in an enlarged manner.

As illustrated in Figs. 5A, 5B, and the like, the first plate-shaped member 200 includes plate-shaped member protrusions 220 and 230 in addition to the plate-shaped member connecting portions 210. The plate-shaped member connecting portion 210 is a rectangular plate-shaped portion extending in the Y-axis direction and disposed at both ends of the first plate-shaped member 200 in the X-axis direction, and includes a plurality of (four in the present embodiment) through holes 211 aligned in the Y-axis direction. The plate-shaped member connecting portions 210 are connected to the first connecting portion 111 together with the second connecting portion 121 (and the second plate-shaped member 300) by the fixing member 130 through the through holes 211, whereby the first plate-shaped member 200 is attached to the outer case 100 (the first outer case 110) (see Fig. 6).

The plate-shaped member protrusions 220 and 230 are long protrusions (protruding strip portions) which are disposed between the two plate-shaped member connecting portions 210, protrude in the Z-axis direction (first direction), and extend from one end edge to the other end edge of the first plate-shaped member 200 in the Y-axis direction (second direction). Specifically, the plate-shaped member protrusion 220 is a protrusion that protrudes in the Z-axis positive direction and linearly extends in the Y-axis direction over both end edges of the first plate-shaped member 200 in the Y-axis direction. The plate-shaped member protrusion 230 is a protrusion that protrudes in the Z-axis negative direction and linearly extends in the Y-axis direction over both end edges of the first plate-shaped member 200 in the Y-axis direction.

Specifically, the plate-shaped member protrusion 220 is a protrusion in which the surface on the Z-axis negative direction side of the first plate-shaped member 200 is recessed in the Z-axis positive direction, and the surface on the Z-axis positive direction side of the first plate-shaped member 200 protrudes in the Z-axis positive direction. The plate-shaped member protrusion 230 is a protrusion in which the surface on the Z-axis positive direction side of the first plate-shaped member 200 is recessed in the Z-axis negative direction and the surface on the Z-axis negative direction side of the first plate-shaped member 200 protrudes in the Z-axis negative direction.

In the present embodiment, the plurality of plate-shaped member protrusions 220 and 230 are disposed and aligned in the X-axis direction (third direction). That is, the plurality of plate-shaped member protrusions 220 and 230 are alternately disposed and aligned in the X-axis direction over the plurality of energy storage devices 400 (the first energy storage device 401 to the fourth energy storage device 404) (see Fig. 7, Fig. 9 and the like). As described above, the first plate-shaped member 200 has a shape like a corrugated plate.

As illustrated in Fig. 6 to Fig. 9 and the like, the first plate-shaped member 200 has the same length as the outer case 100 (first outer case 110) in the X-axis direction and the Y-axis direction. The plate-shaped member protrusions 220 and 230 have the same length as the outer case 100 (the first outer case 110) in the Y-axis direction. Thus, the first plate-shaped member 200 is formed to be longer than the energy storage devices 400 in the X-axis direction and the Y-axis direction, and the plate-shaped member protrusions 220 and 230 are formed to be longer than the energy storage devices 400 in the Y-axis direction. In other words, the first plate-shaped member 200 is disposed so as to protrude from all the energy storage devices 400 on both sides in the X-axis direction and both sides in the Y-axis direction, and the plate-shaped member protrusions 220 and 230 are disposed so as to protrude from all the energy storage devices 400 in the Y-axis direction.

The first plate-shaped member 200 may have the same length as the energy storage devices 400 in the X-axis direction or the Y-axis direction. The first plate-shaped member 200 is only required to be formed so as to extend at least to end edges of the energy storage devices 400 in the X-axis direction or the Y-axis direction, and the plate-shaped member protrusions 220 and 230 is only required to be formed so as to extend at least to end edges of the energy storage devices 400 in the Y-axis direction. In other words, it is sufficient if at least a part of the first plate-shaped member 200 overlaps the end edges of the energy storage devices 400 in the X-axis direction or the Y-axis direction as viewed in the Z-axis direction, and at least a part of the plate-shaped member protrusions 220 and 230 overlaps the end edges of the energy storage devices 400 in the Y-axis direction as viewed in the Z-axis direction.

In the present embodiment, the plate-shaped member protrusions 220 and 230 have a trapezoidal shape when viewed from the Y-axis direction, but may have any shape such as a polygonal shape such as a rectangular shape or a triangular shape, a semicircular shape, a semi-elliptical shape, or a semi-oval shape when viewed from the Y-axis direction. The plate-shaped member protrusions 220 and 230 can also be referred to as recessed portions since one surface of the first plate-shaped member 200 is formed to be recessed.

The first plate-shaped member 200 is disposed in contact with the outer case 100, and a space is formed between the plate-shaped member protrusions 220 and 230 and the outer case 100. As illustrated in Fig. 6, Fig. 9 and the like, the first plate-shaped member 200 is disposed in contact with the first outer case 110, and a space S is formed between the plate-shaped member protrusions 220 and 230 and the first outer case 110. In the space S, a portion of the fixing member 130 that protrudes from the first outer case 110 (the male screw portion of the first fixing member 131 and the second fixing member 132), the outer case protrusion 117 formed on the first outer case 110, and the like are disposed.

The outer case protrusion 117 is a protrusion which is formed on the first outer case 110 and protrudes in the Z-axis negative direction. The outer case protrusion 117 is a protrusion that protrudes from a surface of the first outer case 110 on a Z-axis negative direction side by recessing a surface of the first outer case 110 on a Z-axis positive direction side in order to dispose the attachment bases 113 and 114 on the first outer case 110.

As illustrated in Fig. 9, the protrusion (plate-shaped member protrusion 220) that protrudes toward the energy storage device 400 out of the plate-shaped member protrusions 220 and 230 is disposed in contact with a periphery of the outer case protrusion 116 of the outer case 100. The plate-shaped member protrusion 220 is disposed at a position shifted from the outer case protrusion 116 in the X-axis direction, and hence the plate-shaped member protrusion 220 is brought into contact with a portion of the first outer case 110 which is disposed adjacently to the outer case protrusion 116 in the X-axis direction.

Specifically, the plate-shaped member protrusions 220 each include a contact portion 221 which is disposed in a state of being disposed in contact with the periphery of the outer case protrusion 116. The contact portions 221 are flat-plate-shaped portions which are disposed on both sides of the outer case protrusion 116 in the X-axis direction and extend in the Y-axis direction. With such a configuration, the first plate-shaped member 200 presses the outer case protrusion 116 of the first outer case 110 in the Z-axis positive direction by the contact portions 221 of the plate-shaped member protrusions 220. The outer case protrusion 116 presses a central portion of the long side surface 411a of the case 410 of the energy storage device 400 in the Z-axis positive direction through the end spacer 520.

### [4 Description of effects]

As described above, the energy storage apparatus 1 according to the embodiment of the present invention includes the plate-shaped first plate-shaped member 200 aligned with the energy storage devices 400 in a first direction (Z-axis direction) and disposed along the outer case 100, and the case 410 of the energy storage device 400 includes the case body 411 and the case lid body 412 aligned in a second direction (Y-axis direction). Then, the first plate-shaped member 200 includes plate-shaped member protrusions 220 and 230 that protrude in the first direction and extend over both end edges in the second direction. In this manner, by disposing the plate-shaped first plate-shaped member 200 at a position along the outer case 100 and forming the plate-shaped member protrusions 220 and 230 extending in the second direction on the first plate-shaped member 200, the strength of the outer case 100 in the second direction can be reinforced by the first plate-shaped member 200. Thus, it is possible to improve the crush resistance performance of the energy storage apparatus 1 in the second direction (the alignment direction of the case body 411 and the case lid body 412), and hence it is possible to improve protection of the energy storage device 400 against external impact and the like.

The energy storage apparatus 1 includes the plurality of energy storage devices 400 aligned in a third direction (X-axis direction), and the first plate-shaped member 200 includes the plurality of plate-shaped member protrusions 220 and 230 aligned in the third direction. As described above, in the configuration in which the plurality of energy storage devices 400 is aligned in the third direction, by the first plate-shaped member 200 including the plurality of plate-shaped member protrusions 220 and 230 aligned in the third direction, the crush resistance performance of the plurality of energy storage devices 400 in the second direction can be improved. Thus, protection of the plurality of energy storage devices 400 against external impact and the like can be enhanced.

Since the first plate-shaped member 200 is attached to an outer surface of the outer case 100 of the energy storage apparatus 1, the first plate-shaped member 200 can effectively protect the outer case 100 from external impact. Thus, it is possible to improve protection of the energy storage device 400 against external impact and the like. Since the first plate-shaped member 200 is attached to the outer surface of the outer case 100, the first plate-shaped member 200 can dissipate heat of the energy storage devices 400 through the outer case 100.

Since the first plate-shaped member 200 is disposed in contact with the outer case 100, the first plate-shaped member 200 can reinforce the outer case 100, and hence the protection of the energy storage device 400 against external impact and the like can be enhanced. By forming the space S between the plate-shaped member protrusions 220 and 230 and the outer case 100, weight reduction can be achieved, members such as bolts (the fixing member 130, the outer case protrusion 117, and the like) can be accommodated in the space S, and heat insulation can be performed in the space S. Since the first plate-shaped member 200 is in contact with the outer case 100, the first plate-shaped member 200 can dissipate heat of the energy storage device 400 through the outer case 100.

Since the outer case 100 includes the outer case protrusions 116, the outer case 100 can be reinforced, and hence it is possible to improve protection of the energy storage device 400 against external impact and the like. Since the outer case protrusion 116 protrudes toward the energy storage device 400, it is possible to suppress expansion of the energy storage device 400 caused by pressing of the outer case protrusion 116 against the energy storage device 400. In particular, the plate-shaped member protrusions 220 that protrude toward the energy storage devices 400 are brought into contact with the periphery of the outer case protrusions 116. Thus, even when the energy storage devices 400 are about to expand, the plate-shaped member protrusions 220 restrict the movement of the outer case protrusions 116, whereby the expansion of the energy storage devices 400 can be further suppressed.

### [5 Description of modification example]

Although the energy storage apparatus 1 according to the embodiment of the present invention has been described above, the present invention is not limited to the present embodiment. The embodiment disclosed herein is illustrative in all respects and is not restrictive, and the scope of the present invention includes all modifications within the meaning and scope equivalent to the claims.

In the above-mentioned embodiment, in the outer case 100, the second outer case 120 is a member having a bottomed rectangular cylindrical shape in which an opening is formed on the Z-axis negative direction side, and the first outer case 110 is a flat rectangular member that closes the opening of the second outer case 120. However, the first outer case 110 may be a bottomed rectangular cylindrical member having an opening formed on the Z-axis positive direction side, and the second outer case 120 may be a flat rectangular lid that closes the opening of the first outer case 110, or may have any other shape.

In the above-mentioned embodiment, the first outer case 110 is disposed in the Z-axis negative direction of the energy storage devices 400, and the binding bodies 600 are disposed in the Z-axis positive direction of the energy storage devices 400 and joined to each other. Alternatively, the first outer case 110 may be disposed in the Z-axis positive direction of the energy storage devices 400, and the binding bodies 600 may be disposed in the Z-axis negative direction of the energy storage devices 400 and joined to each other. The energy storage apparatus 1 may have a configuration in which the upper and lower sides of the energy storage apparatus 1 are inverted. In this case, the first plate-shaped member 200 is attached to an upper surface (a surface on a Z-axis positive direction side) of the first outer case 110.

In the above-mentioned embodiment, the binding bodies 600 are attached to the first outer case 110 and bind the energy storage devices 400. However, the binding bodies 600 may not be attached to the first outer case 110, and the binding bodies 600 may be attached to another member to bind the energy storage devices 400.

In the above-mentioned embodiment, the first plate-shaped member 200 is attached to the outer surface (lower surface, surface on z-axis negative direction side) of the first outer case 110 as the outer surface of the outer case 100. However, the first plate-shaped member 200 may be attached to an outer surface (upper surface, surface on Z-axis positive direction side) of the second outer case 120. The first plate-shaped member 200 may be attached to a side surface (a surface on the X-axis direction side or the Y-axis direction side) of the outer case 100. Although the first plate-shaped member 200 is disposed and aligned with the energy storage devices 400 in the Z-axis direction, the first plate-shaped member may be disposed and aligned with the energy storage devices 400 in the X-axis direction or the Y-axis direction (the X-axis direction or the Y-axis direction may be an example of the first direction). The first plate-shaped member 200 may be attached not to the outer surface of the outer case 100 but to the inner surface of the outer case 100. The first plate-shaped member 200 may be disposed in contact with the outer case 100 without being attached (fixed) to the outer case 100, or may be disposed along the outer case 100 without being in contact with the outer case 100.

In the above-mentioned embodiment, the first plate-shaped member 200 is disposed so as to protrude from all the energy storage devices 400 on both sides in the X-axis direction and both sides in the Y-axis direction. However, any one of the energy storage devices 400 may slightly protrude from the first plate-shaped member 200 in either the X-axis direction or the Y-axis direction. It is sufficient if the first plate-shaped member 200 is formed so that at least one energy storage device 400 does not protrude from the first plate-shaped member 200 in either the X-axis direction or the Y-axis direction. Even in this case, as compared with a case where the first plate-shaped member 200 is not disposed, it is possible to improve protection of the energy storage device 400 which does not protrude from the first plate-shaped member 200.

In the above embodiment, the plate-shaped member protrusions 220 and 230 included in the first plate-shaped member 200 are protrusions extending linearly in the Y-axis direction. However, the plate-shaped member protrusion 220 or 230 may be a protrusion in which one surface of the first plate-shaped member 200 is not recessed and the other surface protrudes. Further, the plate-shaped member protrusion 220 or 230 may not extend linearly in the Y-axis direction but may be a protrusion extending while being curved in the Y-axis direction. Furthermore, the plate-shaped member protrusion 220 or 230 may be a protrusion extending in a direction inclined from the Y-axis direction to the X-axis direction side.

In the above embodiment, the plate-shaped member protrusions 220 and 230 included in the first plate-shaped member 200 are long protrusions extending from one end edge to the other end edge of the first plate-shaped member 200 in the Y-axis direction. However, the plate-shaped member protrusion 220 or 230 may not extend from one end edge to the other end edge of the first plate-shaped member 200 in the Y-axis direction, and may be a protrusion extending toward the end edge in the Y-axis direction and partially extend in the Y-axis direction.

In the above-mentioned embodiment, the plate-shaped member protrusion 220 is disposed at a position shifted from the outer case protrusion 116 in the X-axis direction, and is disposed in contact with the periphery of the outer case protrusion 116. However, the plate-shaped member protrusion may be disposed at a position where the plate-shaped member protrusion 220 overlaps with the outer case protrusion 116 in the X-axis direction. In this case, the plate-shaped member protrusion 220 may be disposed in contact with a surface of the outer case protrusion 116 on a Z-axis negative direction side, or a surface of the plate-shaped member protrusion 230 on a Z-axis positive direction side may be disposed in contact with a periphery of the outer case protrusion 116. Even in this case, it is possible to obtain an effect that the plate-shaped member protrusion 220 or 230 presses the outer case protrusion 116 in the Z-axis positive direction. In this case, the outer case protrusion 116 may have the same shape as the plate-shaped member protrusion 220, and a space may not be formed between the plate-shaped member protrusions 220 and 230 and the outer case 100 (the first outer case 110).

In the above embodiment, the first plate-shaped member 200 has the plurality of plate-shaped member protrusions 220 and 230, but the first plate-shaped member 200 may have only one plate-shaped member protrusion 220 or may have only one plate-shaped member protrusion 230.

The energy storage apparatus 1 does not need to include all the components described above. The energy storage apparatus 1 may not include the control unit 20, the gasket 140, the second plate-shaped member 300, the spacer 500, the binding body 600, and the like.

A form constructed by arbitrarily combining the components included in the above embodiment and the modifications thereof is also included in the scope of the present invention.

The present invention can be implemented not only as the energy storage apparatus 1 but also as a combination of the outer case 100 and the first plate-shaped member 200 or as the first plate-shaped member 200.

### INDUSTRIAL APPLICABILITY

The present invention can be applied to an energy storage apparatus including an energy storage device such as a lithium ion secondary battery.

### DESCRIPTION OF REFERENCE SIGNS

1: energy storage apparatus
10: energy storage unit
20: control unit
21, 22: external terminal
800, 810, 820, 830: bus bar
100: outer case
110: first outer case
111: first connecting portion
111a, 121a, 211, 311, 611, 621: through hole
116, 117: outer case protrusion
120: second outer case
121: second connecting portion
130: fixing member
131: first fixing member
132: second fixing member
200: first plate-shaped member
210: plate-shaped member connecting portion
220, 230: plate-shaped member protrusion
221: contact portion
300, 301, 302: second plate-shaped member
400: energy storage device
410: case
411: case body
412: case lid body
420: electrode terminal
500: spacer
600: binding body
900, 910, 920: conductive member

## Claims

1. An energy storage apparatus comprising:
an energy storage device including a case;
an outer case in which the energy storage device is accommodated; and
a plate-shaped member aligned with the energy storage device in a first direction and disposed along the outer case, wherein
the case includes a case body and a case lid body that are joined to each other,
the case body and the case lid body are disposed and aligned in a second direction intersecting with the first direction, and
the plate-shaped member includes a plate-shaped member protrusion that protrudes in the first direction and extends toward an end edge of the plate-shaped member in the second direction.

2. The energy storage apparatus according to claim 1, wherein
the plate-shaped member protrusion extends from one end edge of the plate-shaped member to an other end edge of the plate-shaped member in the second direction.

3. The energy storage apparatus according to claim 1 or 2, wherein
the energy storage apparatus includes a plurality of the energy storage devices aligned in a longitudinal direction of the case lid body in a third direction intersecting with the first direction and the second direction, and
the plate-shaped member includes a plurality of the plate-shaped member protrusions aligned in the third direction.

4. The energy storage apparatus according to any one of claims 1 to 3, wherein
the plate-shaped member is attached to an outer surface of the outer case.

5. The energy storage apparatus according to any one of claims 1 to 4, wherein
the plate-shaped member is disposed in contact with the outer case, and
a space is formed between the plate-shaped member protrusion and the outer case.

6. The energy storage apparatus according to any one of claims 1 to 5, wherein
the outer case includes an outer case protrusion that protrudes toward the energy storage device, and
a protrusion of the plate-shaped member protrusion, the protrusion protruding toward the energy storage device is disposed in contact with a periphery of the outer case protrusion of the outer case.
